(19)

Europäisches
Patentamt
European
Patent Office
Office européen
des brevets

(11) **EP 2 360 636 A1**

(12) **EUROPEAN PATENT APPLICATION**

(43) Date of publication:
**24.08.2011 Bulletin 2011/34**

(51) Int Cl.:
***G06Q 40/00*** (2006.01)

(21) Application number: **10150740.8**

(22) Date of filing: **14.01.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Balancion OY
02570 Siuntio KK (FI)**

(72) Inventors:
• **Saarela, Samppa
04410, Järvenpää (FI)**

• **Hautala, Heli
33100, Tampere (FI)**
• **Muurikainen, Jussi
02570, Siuntio KK (FI)**

(74) Representative: **Kalliola, Sanna Marketta et al
Espatent Oy
Kaivokatu 10 D
00100 Helsinki (FI)**

(54) **Categorization of financial transactions**

(57)     Automatic categorization of events concerning financial transactions. An event is received and compared to reference events. Similarity measures for the reference events are determined by comparing data items of the received event and data items of the reference event. Weights are dynamically assigned for the reference events and a best matching category among categories associated with the reference events is identified on the basis of weights assigned to the reference events, the determined similarity measures and distribution of categories associated with the reference events.

Fig. 2

## Description

TECHNICAL FIELD

The present invention generally relates to categorizing event data and especially to categorizing financial transaction data.

BACKGROUND ART

Banks and financial data management systems offer users tools for tracking their financial data by categorizing individual financial events/transactions (incoming or outgoing payments) into subcategories so that it is easier for users to follow their spending. For example following categories could be used: gasoline, food, clothing, travelling etc.

The categorization can be performed manually or automatically. One big challenge in such systems is how to automatically categorize the events such that the subcategories chosen for the events are sensible. The available systems are often based on categorizing the financial events on the basis of certain keywords for example in an event description field. Another option that is used is categorizing events on the basis of main line of business of a receiver of a payment. WO2008150395 presents one categorization solution in which business listings and categories assigned to the businesses are used for finding appropriate category. Automatic categorization of financial events based on these may not provide optimal results in all cases.

SUMMARY

According to a first example aspect of the invention there is provided a method for automatically categorizing events concerning financial transactions, the method comprising:

receiving an event comprising a plurality of data items,
finding a set of reference events and associated categories from an event
database on the basis of predefined selection criteria,
determining similarity measures for the reference events,
dynamically assigning weights for the reference events,
identifying a best matching category among the categories associated with the reference events on the basis of weights assigned to the reference events, the determined similarity measures and distribution of categories associated with the reference events, and
categorizing the received event into the best matching category.

According to a second example aspect of the invention there is provided an apparatus for automatically categorizing events concerning financial transactions, the apparatus comprising:

an input for receiving an event comprising a plurality of data items, and
a processor configured to control the apparatus to perform
finding a set of reference events and associated categories from an event database on the basis of predefined selection criteria,
determining similarity measures for the reference events,
dynamically assigning weights for the reference events,
identifying a best matching category among the categories associated with the reference events on the basis of weights assigned to the reference events, the determined similarity measures and distribution of categories associated with the reference events, and
categorizing the received event into the best matching category.

According to a third example aspect of the invention there is provided a computer program comprising computer executable program code, which when executed by a processor of an apparatus causes the apparatus to perform method of the first aspect or any associated embodiment.

In a further aspect of the invention the computer program of the third aspect is embodied on a memory medium.

Different non-binding example aspects of the present invention have been illustrated in the foregoing.

BRIEF DESCRIPTION OF THE DRAWINGS

The invention will be described, by way of example only, with reference to the accompanying drawings, in which:

Fig. 1    shows a block diagram of an apparatus according to an example embodiment;
Fig. 2    shows a flow chart according to an example embodiment; and
Fig. 3    shows a flow chart according to another example embodiment.

DETAILED DESCRIPTION

Various embodiments of present invention provide a new method of categorizing financial events (financial transaction data) for use in financial data management services. Embodiments may be implemented in software, hardware, application logic or a combination of software, hardware and/or application logic. The software, application logic and/or hardware may reside on a server of a service provider.

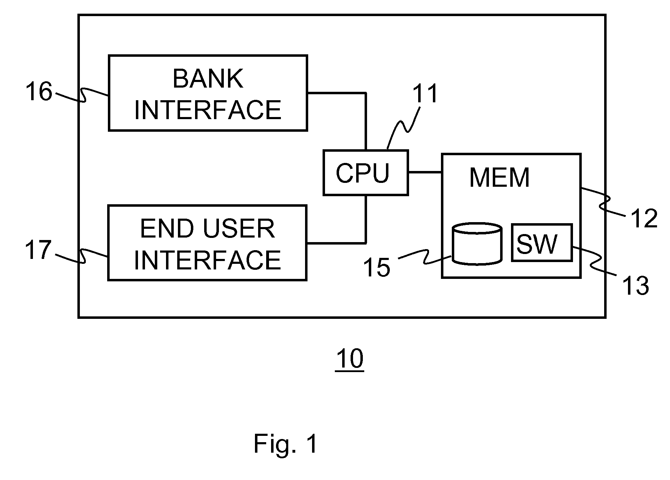

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 1 below. The computer-readable medium may be a digital data storage such as a data disc or diskette, optical storage, magnetic storage, or opto-magnetic storage. The computer-readable medium may be formed into a device without other substantial functions than storing memory or it may be formed as part of a device with other functions, including but not limited to a memory of a computer, a chip set, and a sub assembly of an electronic device. Figure 1 shows an example block diagram of an apparatus 10 according to certain example embodiments of the invention. The apparatus 10 may be implemented on a general purpose computer or a server for example.

The apparatus 10 comprises at least one memory 12 configured to store computer program code (or software) 13 and a database 15. The apparatus 10 further comprises at least one processor 11 for controlling the operation of the apparatus 10 using the computer program code 13.

The at least one processor 11 may be a master control unit (MCU). Alternatively, the at least one processor 11 may be a microprocessor, a digital signal processor (DSP), an application specific integrated circuit (ASIC), a field programmable gate array, a microcontroller or a combination of such elements. Figure 1 shows one processor 11, but the apparatus 10 may comprise a plurality of processors 11. The at least one memory 12 may be, for example, random access memory, flash memory, hard disk, hard disk array, optical storage, memory stick, memory card and/or magnetic memory. The database 15 may be for example an SQL-database. Figure 1 shows one memory 12, but the apparatus 10 may comprise a plurality of memories 12.

The at least one processor in combination with the computer program 13 is configured to implement a bank interface 16 and an end user interface 17 for enabling interaction with bank systems, or other sources of financial events, and end users, respectively.

The bank interface 16 and the end user interface 17 are configured to communicate with other apparatuses over a data communication interface (not shown). The data communication interface may be for example a LAN (local area network) interface or an Ethernet interface or some wireless communication interface. The bank interface 16 is implemented for example as a secure communication connection that automatically fetches financial events from bank systems. The end user interface 17 is implemented for example as a web interface that is accessible with a web browser application.

The database 15 is configured to store financial events received through the bank interface 16. The database further stores information about end users associated with the events. Additionally the database is used for storing categorization information for the events.

A skilled person appreciates that in addition to the elements shown in Figure 1, the apparatus 10 may comprise other elements, such as microphones, displays, as well as additional circuitry such as input/output (I/O) circuitry, memory chips, and the like.

As to the operations of the embodiments of the invention, when the computer program code 13 is executed by the at least one processor 11, this causes the apparatus 10 to implement categorization of (financial) events according to embodiments of the invention.

The categorization of events in embodiments of the invention is performed based on previously categorized reference events. The number of available reference events therefore increases the more the system is used. At the same time the categorization ability of the system is likely to improve over time. When an event is categorized, it is stored in a database together with information about the category it is associated with. For example a link to the associated category is added to the respective database entry. In an embodiment an event may be associated with more than one category. For example the amount of a transaction may be divided between two or more categories. For example 40% of the amount may be assigned to a first category and 60% to a second category, or 10% to the first one and 90% to the second one, etc.

The categories associated with events stored in the database may then be used for providing various reports to users of the system for example through the end user interface 17 of Figure 1.

In an embodiment the events that are categorized are financial events/transactions that include information about incoming or outgoing payments. The events may be for example events in a bank account statement. In an embodiment the events concern data registered under a customer loyalty program. That is, the event is not necessarily directly associated with an incoming or outgoing payment.

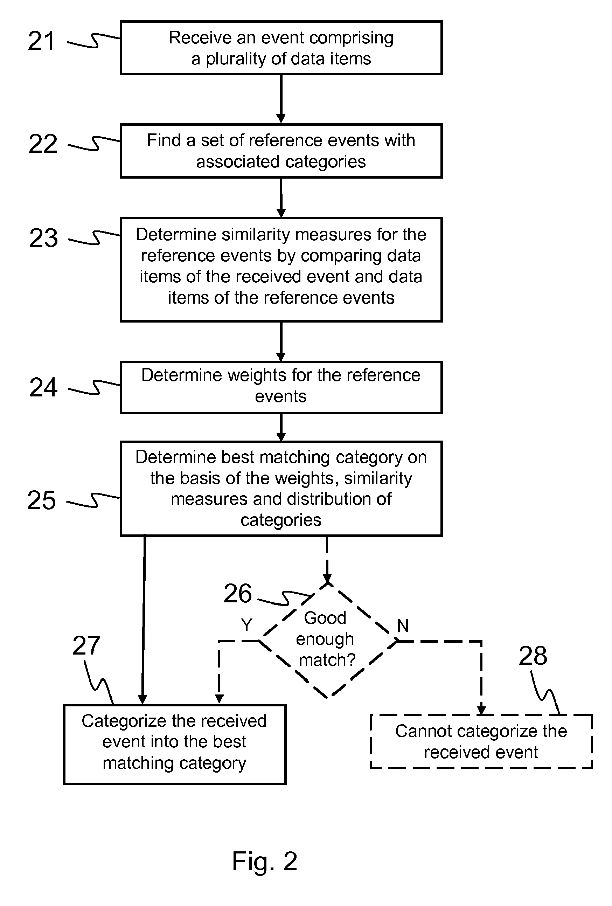

Figure 2 shows a flow chart according to an example embodiment. For example a financial management service may implement the method illustrated in the flow chart.

In phase 21, an event comprising a plurality of data items is received. The event is received for example through the bank interface 16 of Figure 1 or the like. It must be noted that a plurality of events may be received and processed at the same time, but for the sake of clarity processing of one event is discussed. Other events may be processed in parallel or consecutively. The events may be first stored in a database without information about associated category and the category information may be added later after the event has been categorized. The events may be fetched from different banks or other sources as appropriate and/or banks may push the events to the service.

The categorization of the event is then started. In phase 22, a set of reference events and categories associated with the reference events are fetched from an event database on the basis of predefined selection criteria. The predefined criteria is such that a limited set of events in the system are selected in an expedient and simple manner. These reference events are then analyzed in more detail. By initially limiting the number of events chosen for the more detailed analysis one achieves that not all events of the system need to be analyzed in detail whereby processing power can be saved.

For example 250 reference events may be fetched. Alternatively, some other amount of events may be fetched, such as 10, 50, 100, 500, 1000 or 5000. The number of events that are fetched may vary dynamically depending on characteristics of the available reference events and received event. In any case, there may be an upper limit for the number of reference events that will be chosen. The events that are fetched are events that have been manually categorized in an earlier phase. By excluding automatically categorized events, it is possible to avoid flooding the system with continuously wrongly categorized events.

In an embodiment the reference events that are fetched are at least primarily events of the same user. The events of the same user are referred to as personal events. In an embodiment the reference events additionally or alternatively include events of other users of the service. The events of other users are referred to as community events. By using the community events, community learning ability can be employed. That is, users may benefit from events that have been manually categorized by some other user.

In an embodiment the reference events are roughly similar events with the received event. In an embodiment the reference events are events in which content of at least one data item includes the same (exactly same or almost same) content as corresponding data item in the received event. In an embodiment the reference events are events that have the same (exactly same or almost same) receiver or payer as the received event. Also some other criteria can be used depending on the situation.

In an embodiment, events that concern payments to private persons are excluded from the reference events. I.e. events, in which a receiver field includes name of a private person, are excluded. In an embodiment this exclusion concerns only the community events and any personal events can be included in the reference events.

In an embodiment, only events that concern payments to legal persons are included in the reference events. For example following types of events may be considered as payments made to legal entities: a receiver field includes a name of a legal entity, such as a business name, the event includes a bank reference number, and/or the event indicates otherwise that it is a credit card payment. In an embodiment this concerns only the community events and any personal events can be included in the reference events.

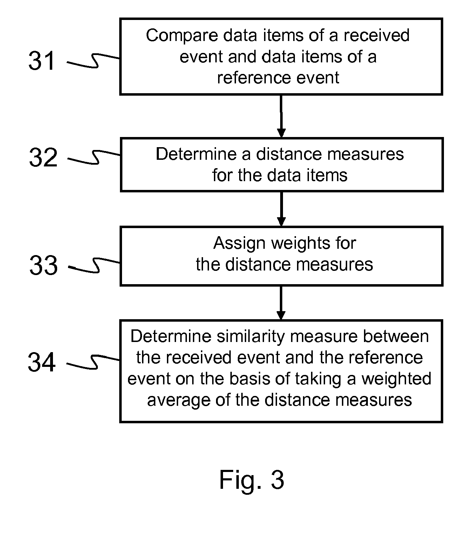

In phase 23, similarity measures are determined for the reference events. This is done by comparing data items of the received event and the reference events. An example method for doing this is discussed in more detail below in connection with Figure 3.

In an embodiment the similarity measure is a value between 0 and 1, zero (0) meaning no similarity and one (1) meaning exactly same (or the other way around). Clearly also other value range may be used. For example values between 0 and 1, 0 and 100, or 0 and 1000 may be used, or negative values may be used.

In phase 24, weights are determined for the reference events. For example user's own reference events (personal events) may be given more weight than reference events of other users (community events). In an embodiment similarity measure of a reference event needs to fulfill certain criteria, e.g. exceed certain limit. If the criteria is not fulfilled, the reference event may be given zero weight, whereby the reference event is ignored and not taken into account. For example over 50%, 75% or 90% similarity may be required. In an embodiment a reference event having the highest similarity measure is given an extra weight. In this way the closest reference event is given priority over other reference events, but the other reference events are not excluded at this phase. In an embodiment however, an exactly matching reference event may be given 100% weight, whereby in this special case all other reference events are ruled out at this phase already.

In phase 25, a best matching category is determined among the categories associated with the reference events. The determination is performed based on the weights assigned for the reference events, the similarity measures and distribution of the categories associated with the reference events. In an embodiment all categories of all reference events are taken into account. If weight of a certain reference event happens to be zero, that particular reference event becomes automatically ignored.

In an embodiment a score is calculated for all categories of the reference events by multiplying the weights and similarity measures of the reference events. It must be noted that one category may be associated with more than one reference events. That is, one category may receive more than one score. The scores given to categories are then summed up to obtain one total score for each category. By summing up the scores the distribution of the categories associated with the reference events is taken into account. The category having the highest total score is chosen as a best matching category. In this way the more often a category exists in the set of reference events the higher score that event receives. Further, a plurality of reference events associated with a certain category may overrule a category associated with almost matching reference event. In this way one almost matching wrongly categorized reference event does not necessarily affect on the automatic categorization.

In an embodiment a reference event may be associated with more than one category. In that case, the score of the reference event is divided between all categories associated with the event. The score may be divided for example in proportion to the amount associated with each category in relation to the total amount of that event.

In phase 27, the received event is categorized into the best matching category.

Thereafter information about the assigned category is stored in connection with the received event in a database.

In an embodiment, the method shown in Figure 2 further comprises checking if the best matching category is a good enough match, phase 26 shown with dashed line. It may be checked if the best matching category fulfils predefined criteria. There may be for example a predetermined threshold that the score given to certain category needs to exceed in order to be good enough or the difference between the score of the best matching category and the score of the second best matching category needs to exceed predefined threshold, i.e. the best matching category needs to clearly distinguish from other categories. Also if there are multiple equally (or almost equally) well matching categories, the best matching category may be regarded as not being good enough. If the best matching category is considered not to be good enough, the system concludes that the received event cannot be reliably categorized by the automatic categorization, phase 28. The user of the system may be given a possibility to manually categorize such events.

It must be noted that the user of the system may be given a possibility to manually categorize also automatically categorized events as the automatic categorization may not always be correct.

In an example embodiment, at least some of the data items of the original event are removed from the event before storing the event in the database. For example following scenario is possible: as to outgoing payments, the payer is not stored, and as to incoming payments, the receiver is not stored. Instead only a link from the event to the respective user is stored. In this way the event in the database as such is anonymized and the owner of the event cannot be identified without the link to the respective user information. In this way personal information of other users is not used in categorizing events of certain user. In this way, risk of compromising personal privacy is reduced.

Figure 3 shows a flow chart according to an example embodiment. For example the phase 23 of Figure 2 can be implemented according to the method illustrated in the flow chart of Figure 3.

In phase 31, data items of a received event and data items of a reference event are compared. In phase 32, a distance measure is determined for the data items. The distance measure may be determined in a different way for different data items. In an embodiment minimum distance measure (e.g. 0) indicates 100% similarity and maximum distance measure (e.g. 1, assuming that distance measures are normalized between o and 1) indicates no similarity (0% similarity).

Clearly also the opposite notation could be used.

The distance measures may be determined for example in the following way:

- Message/description: editing distance. Editing distance indicates how many characters need to changed in a string of characters in order to have exactly same string as a reference string.
- Bank reference: editing distance.
- Transaction type: similarity true/false. Transaction type may be for example cash withdrawal, card payment, bank transfer etc.
- Payer: similarity true/false.
- Receiver: similarity true/false.
- Date/Time: Numbers of the days of a month are normalized between 0 and 1, for example so that the first day of the month receives value 0 and last day of the month receives value 1 and the remaining days receive evenly distributed values between 0 and 1. The normalized values are then compared. In this way the last day of the month always receives same value even though different months have different number of days. Additionally, proximity of the normalized values may be taken into account. In this way, small differences in the date can be handled properly. An event may be in fact the same as the reference event even though there is a minor difference in the number of the day of a month (e.g. monthly mortgage payment may take place with minor variation in the number of the day of the month). I.e. an exact match in the number of the day of a month is not required. Also weekday, month, and/or time of the day may be taken into account when determining similarity. For example Monday-Friday may have different effect that Saturday-Sunday.
- Sum: The amounts are compared. An exact match is not required. Also magnitude of the sum may be taken into account. For example magnitude of tens Euros is likely to have different purpose than magnitude of thousands Euros. A sum that is divisible by 10 may indicate a cash withdrawal since only "full" bills can be withdrawn.

In an embodiment comparison of sums is performed as follows:

1) If the amounts are the same, the distance measure is the minimum (0).

2) If one of the amounts is positive and the other one is negative, the distance measure is the maximum (1).

3) Absolute values of the amounts are determined.

4) The amounts are relativized by increasing large amounts more than small amounts. In an embodiment following equation is used

$$x\_rel = (x / a) \char94 b + c,$$

where

x = original amount (absolute value),
x_rel = relativized amount,
a, b, and c = predefined constants.

5) Difference between the relativized amounts is calculated and normalized between the minimum and the maximum to obtain the distance measure.

By relativizing the amounts one achieves that large amounts, which are more significant in real life, are given more weight than relatively small amounts. In this way the magnitude of the amounts is taken into account.

In an embodiment all distance measures are normalized so that effect of different data items is in the same magnitude. The distance measures may be normalized for example between 0 and 1.

In phase 33, the distance measures are weighted. Weights assigned to different data items may vary depending on the type of the event. For example weights used for an incoming payment may be different from weights used for an outgoing payment. In an embodiment, the weights that are used are heuristically or asymmetrically chosen predetermined values. For example date/time, transaction type and characteristics of the sum may have an effect on the weights. In an embodiment, if certain data item is empty, that data item receives zero weight and other data items receiver more weight respectively. That is, the empty data item is ignored. For example, if receiver information is missing other data items may be weighted more that if the receiver information is available. In an embodiment also data items that are empty or not included in the received event are given weight. In this case, reference events in which those data items are also empty or not included will appear more similar with the received event than reference events in which those data items are not empty.

In phase 34, a similarity measure between the received event and the reference event is determined by taking a weighted average over the distance measures and by using the weighted average to obtain the similarity measure. In an embodiment weighted average 0 corresponds to 100% similarity measure and weighted average 1 corresponds to 0% similarity measure. In another embodiment weighted average 0 corresponds to similarity measure value 1 and weighted average 1 corresponds to similarity measure value 0. Also different notation may be used.

It must be noted that in most of the examples presented herein, a higher similarity measure or score means increased similarity between events or data items. Clearly also the opposite notation could be used. I.e. a lower score may mean increased similarity.

In an example embodiment, data of a user is removed from the system. The reason to remove the data may be for example that the user wishes to stop using the service for some reason. The user data is removed as follows:

- It is checked if events tied to the resigning user could be used as a reference in categorizing some other events (of any user of the system). It is checked for example if there are manually categorized events that are not made by or to a private person. If so, those reference events are anonymized so that they can no longer be connected to the resigning user. In an example, a link to user information is removed from the event. All other events tied to the resigning user are removed.

- Any data identifying the resigning user is removed from the system and the associated user account is disabled/removed.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention. It is also noted that the above embodiments are used merely to explain selected aspects or steps that may be utilized in implementations of the present invention. Some features may be presented only with reference to certain example embodiments of the invention. It should be appreciated that corresponding features may apply to other embodiments as well.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for automatically categorizing events concerning financial transactions, the method comprising:

   receiving an event comprising a plurality of data items,
   finding a set of reference events and associated categories from an event database on the basis of predefined selection criteria,
   determining similarity measures for the reference events,
   dynamically assigning weights for the reference events,
   identifying a best matching category among the categories associated with the reference events on the basis of weights assigned to the reference events, the determined similarity measures and distribution of categories associated with the reference events, and
   categorizing the received event into the best matching category.

2. The method of claim 1, wherein determining a similarity measure for a reference event comprises
   comparing data items of the received event and data items of the reference event,
   determining distance measures for data items of the reference event, wherein a distance measure represents difference between a data item of the reference event and a respective data item of the received event,
   dynamically assigning weights for the distance measures,
   taking a weighted average over the distance measures, and
   using the weighted average to obtain the similarity measure for the reference event.

3. The method of claim 1 or 2, wherein identifying the best matching category comprises
   calculating scores for the categories associated with the reference events by multiplying the weights and similarity measures of the reference events,
   summing up scores given to the categories to obtain a total score for each category, and
   choosing the category with the highest total score as the best matching category.

4. The method of any one of claims 1-3, wherein the set of reference events comprises events that have been manually categorized in an earlier phase.

5. The method of any one of claims 1-4, wherein the received event is associated with a certain user and the set of reference events comprises events associated with said certain user.

6. The method of claim 5, wherein the set of reference events further comprises events associated with a community of users.

7. The method of claim 6, further comprising assigning more weight to the reference events associated with said certain user than to the reference events associated with the community of users.

8. The method of any one of claims 1-7, further comprising assigning weights for the reference events at least partially on the basis of the determined similarity measures.

9. The method of any one of claims 1-8, further comprising
   determining if the best matching category fulfills predefined criteria, and
   if the best matching category does not fulfill the predefined criteria, concluding that the received event cannot be automatically categorized.

10. An apparatus for automatically categorizing events concerning financial transactions, the apparatus comprising:

    an input for receiving an event comprising a plurality of data items, and
    a processor configured to control the apparatus to perform
    finding a set of reference events and associated categories from an event database on the basis of predefined selection criteria,
    determining similarity measures for the reference events,
    dynamically assigning weights for the reference events,
    identifying a best matching category among the categories associated with the reference events on the basis of weights assigned to the reference events, the determined similarity measures and distribution of categories associated with the reference events, and
    categorizing the received event into the best matching category.

11. The apparatus of claim 10, wherein the processor is configured to control the apparatus to perform determining a similarity measure for a reference event by
    comparing data items of the received event and data items of the reference event,
    determining distance measures for data items of the reference event, wherein a distance measure represents difference between a data item of the reference event and a respective data item of the received event,

dynamically assigning weights for the distance measures,

taking a weighted average over the distance measures, and

using the weighted average to obtain the similarity measure for the reference event.

**12.** The apparatus of claim 10 or 11, wherein the processor is configured to control the apparatus to perform identifying the best matching category by calculating scores for the categories associated with the reference events by multiplying the weights and similarity measures of the reference events, summing up scores given to the categories to obtain a total score for each category, and choosing the category with the highest total score as the best matching category.

**13.** The apparatus of any one of claims 10-12, wherein the set of reference events comprises events that have been manually categorized in an earlier phase.

**14.** The apparatus of any one of claims 10-13, the processor is configured to control the apparatus to assign weights for the reference events at least partially on the basis of the determined similarity measures.

**15.** A computer program comprising computer executable program code, which when executed by a processor of an apparatus causes the apparatus to perform method of any one of claims 1-9.

10

Fig. 1

| | |
|---|---|
| 21 | Receive an event comprising a plurality of data items |
| 22 | Find a set of reference events with associated categories |
| 23 | Determine similarity measures for the reference events by comparing data items of the received event and data items of the reference events |
| 24 | Determine weights for the reference events |
| 25 | Determine best matching category on the basis of the weights, similarity measures and distribution of categories |
| 26 | Good enough match? |
| 27 | Categorize the received event into the best matching category |
| 28 | Cannot categorize the received event |

Fig. 2

31 ⌇ 
┌─────────────────────────────────┐
│   Compare data items of a received   │
│     event and data items of a      │
│        reference event           │
└─────────────────────────────────┘

32 ⌇
┌─────────────────────────────────┐
│   Determine a distance measures    │
│        for the data items         │
└─────────────────────────────────┘

33 ⌇
┌─────────────────────────────────┐
│        Assign weights for         │
│       the distance measures       │
└─────────────────────────────────┘

34 ⌇
┌─────────────────────────────────┐
│ Determine similarity measure between │
│  the received event and the reference │
│ event on the basis of taking a weighted │
│   average of the distance measures   │
└─────────────────────────────────┘

Fig. 3

Europäisches
Patentamt

European
Patent Office

Office européen
des brevets

**EUROPEAN SEARCH REPORT**

Application Number

EP 10 15 0740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/150395 A1 (MINT SOFTWARE INC [US]) 11 December 2008 (2008-12-11) * the whole document * ----- | 1-15 | INV. G06Q40/00 |
| X | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, 1 November 2007 (2007-11-01), pages 592-593, XP002456252 ISSN: 0170-9291 | 1-15 | |
| L | * The technical aspects identified in the present application (Art. 92 EPC) are considered part of common general knowledge. Due to their notoriety no documentary evidence is found to be required. For further details see the accompanying Opinion and the reference below.; the whole document * ----- | 1-15 | TECHNICAL FIELDS SEARCHED (IPC) G06Q |

The present search report has been drawn up for all claims

| Place of search | Date of completion of the search | Examiner |
|---|---|---|
| Munich | 16 March 2010 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 0740

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2010

| Patent document cited in search report | Publication date | Patent family member(s) | Publication date |
|---|---|---|---|
| WO 2008150395 A1 | 11-12-2008 | AU 2008260584 A1<br>CA 2685296 A1<br>EP 2153313 A1<br>US 2008301042 A1 | 11-12-2008<br>11-12-2008<br>17-02-2010<br>04-12-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008150395 A